# EUROPEAN PATENT SPECIFICATION

(11) **EP 3 665 071 B1**
(45) Date of publication and mention of the grant of the patent: **04.10.2023**
(21) Application number: 18758538.5
(22) Date of filing: 08.08.2018
(51) Int. Cl.: B62D 29/04, B62D 33/02, B62D 53/06, B62D 53/08

(54) **COMPOSITE SEMI-TRAILER AND A METHOD FOR PRODUCING A COMPOSITE SEMI-TRAILER**
ZUSAMMENGESETZTER SATTELAUFLIEGER UND VERFAHREN ZUR HERSTELLUNG EINES ZUSAMMENGESETZTEN SATTELAUFLIEGERS
SEMI-REMORQUE COMPOSITE ET PROCÉDÉ DE FABRICATION D'UNE SEMI-REMORQUE COMPOSITE

(30) Priority: 09.08.2017 DK PA201770609
(43) Date of publication of application: 17.06.2020
(73) Proprietor: C-Trailers A/S, 7700 Thisted (DK)
(72) Inventor: PEDERSEN, John, 8462 Harlev (DK)
(74) Representative: Patrade A/S
(86) International application number: PCT/DK2018/050191
(87) International publication number: WO 2019/029778

(56) References cited:
- EP-A2- 1 609 704
- WO-A1-2006/117395
- DE-A1-102006 039 930
- GB-A- 2 513 146

## Description

### Field of the Invention

The present invention relates to a semi-trailer comprising a superstructure having a load bearing surface and an underside, a chassis, at least one set of wheels connected to the chassis, and a king pin assembly located on the underside and forward end of the superstructure and adapted for connecting the trailer to a fifth wheel of a towing vehicle, wherein the superstructure and chassis is a self-supporting composite element having shells surrounding a core, wherein the king pin assembly comprises a king pin and a skid plate, and wherein the king pin is connected to the skid plate, and wherein the king pin assembly further comprise a retainer plate, wherein the retainer plate is located inside the shells and wherein the skid plate is connected to the retainer plate by cooperating attachment means.

The invention further relates to a king pin assembly for use in a semi-trailer according to any of the claims 1 to 8 and comprising a king pin and a skid plate, and wherein the king pin is connected to the skid plate.

Furthermore the invention relates to a method of producing a superstructure and chassis for a semi-trailer.

### Background of the Invention

A semi-trailer is possibly the most common vehicle used for road transport of various types of payload. The semi-trailer is being towed behind a towing vehicle. The semi-trailer has a number of rear axles, but no front axle. Therefore a large part of the load may be supported by the towing vehicle.

Various types of semi-trailers are known, for example, box, dry bulk, flatbed, or tanker.

The towing vehicle has a wide coupling plate known as a fifth wheel bolted to its chassis at the aft end of the towing vehicle. The semi-trailer rests on the fifth wheel. A king pin on the semi-trailer is received by the fifth wheel and the semi-trailer pivots about the fifth wheel about an axis through the king pin. The fifth wheel and the king pin is on the critical load path from the towing vehicle to the semi-trailer. Therefore the king pin to semi-trailer connection is critical.

The size and maximum loaded weight of the semi-trailer is regulated by law. The loaded weight is composed of a component for the empty weight of the semi-trailer and a component for the weight of the payload. It is desirable to maximise the component for the payload. Reducing the weight component of the semi-trailer as much as possible by optimising the construction of the trailer by for example choosing high strength and low weight materials may accomplish this. An example of such materials may be fibre-reinforced composites.

An example of a composite trailer is disclosed with the applicants patent EP 1 098 749 B1. EP 1 098 749 B1 and DE 10 2006 039930 disclose a trailer comprising a superstructure with at least one support surface mounted on at least one set of wheels and means for coupling to the towing vehicle, wherein the superstructure, the chassis, and the tow-bar/triangle consist of one and the same self-supporting construction of composite materials, comprising external shells between which a core of suitable core material is placed. This principle provides for an optimised structure, where the use of the material as load carrying elements may be optimised. The trailer does not provide for a king pin.

DE 10 2006 039 930 A1 discloses a semi-trailer according to the introduction.

### Object of the Invention

The object of the present invention is to integrate a king pin into a trailer comprising a self-supporting composite element, wherein the king pin is able to transfer the load from the towing vehicle to the trailer structure.

### Description of the Invention

According to the present invention, this is achieved by a semi-trailer comprising a superstructure having a load bearing surface and an underside, a chassis, at least one set of wheels connected to the chassis, and a king pin assembly located on the underside and forward end of the superstructure and adapted for connecting the trailer to a fifth wheel of a towing vehicle, wherein the superstructure and chassis is a self-supporting composite element having shells surrounding a core, wherein the king pin assembly comprises a king pin and a skid plate, and wherein the king pin is connected to the skid plate, and wherein the king pin assembly further comprise a retainer plate, wherein the retainer plate is located inside the shells and wherein the skid plate is connected to the retainer plate by cooperating attachment means said semi-trailer being peculiar in that the core comprises a retainer adapter core element, wherein the shape of the retainer core element is complimentary to the retainer plate.

According to the present invention this is further achieved by a king pin assembly for use in a semi-trailer and comprising a king pin and a skid plate, and wherein the king pin is connected to the skid plate, said king pin assembly being peculiar in that the king pin assembly further comprise a retainer plate, wherein the retainer plate is adapted for being located inside a shell of a self-supporting composite superstructure, and wherein the skid plate is connected to the retainer plate by cooperating attachment means.

Furthermore, according to the present invention this is achieved by a method of producing a superstructure and chassis for a semi-trailer, wherein the superstructure and chassis is a self-supporting composite element having shells surrounding a core, and comprising the steps of;
A. providing a mould,
B. providing a kit of pre-cut fibre mats,
C. providing a kit of pre-shaped core elements,
D. providing a king pin assembly comprising a king pin, a skid plate, a retainer plate and cooperating attachment means.
E. lay up of the fibre mats, the core elements and the retainer plate in the mould according to a predefined sequence,
F. Applying resin to the fibre mats,
G. Curing of the resin,
H. Connecting the king pin, the skid plate and the retainer plate by cooperating attachment means, by means of the core comprising a retainer adapter core element, wherein the shape of the retainer core element is complimentary to the retainer plate,
I. De-moulding the cured self-supporting composite element.

It is herewith achieved that the king pin is integrated into the self supporting element of the semi-trailer and a strong and secure connection is established which is able to transfer the load from the towing vehicle to the trailer structure.

It is herewith achieved that the retainer plate may be imbedded into the core in a way which maximises the load transfer from the retainer plate to the core and shells and any additional reinforcement material integrated into the core and shell.

Furthermore, it is avoided that a space around the retainer plate will create voids inside the core. These voids will be filled with resin during the curing of the composite element. The resin will not add to the strength of the construction but it will add to the weight.

A further advantage of the invention is that the king pin and skid plate may be disconnected from the retainer plate for replacement due to wear.

The retainer plate is located inside the shells and attached either directly to the shells or to a load carrying structure within the shells. In any case part of the shell will be sandwiched between the retainer plate and the skid plate.

The retainer plate may be a flat plate or the retainer plate may employ various means to provide for a secure connection to the shell, core and any reinforcement means within the core. For example the retainer plate may have protrusions or webs.

The superstructure is selected according to the type of semi-trailer. The superstructure may be a flat bed, a box, a flat bed including a tank, a flat bed including means to carry dry bulk. The superstructure may be adapted for carrying a standard container. Furthermore, the superstructure in case of a box trailer may be a monocoque composite structure.

The load bearing surface of the superstructure is most commonly the upward facing side of the superstructure. The underside of the superstructure is facing the chassis, the wheels, and a collapsible landing gear at the front end and the king pin. In the semi-trailer of the present invention the superstructure and chassis are one integrated self supporting composite element. The advantage of this is a substantial reduction of labour hours to manufacture the trailer and a substantial reduction of the weight of the semi-trailer compared to a conventional metal trailer having separate superstructure and chassis.

The king pin assembly is adapted for attachment to a fifth wheel of a towing vehicle. The king pin and skid plate are subject to wear and are therefore replaceable as previously discussed.

The composite element which composes the superstructure and chassis comprises a shell which is surrounding a core. The core may be a rigid foam core or a hollow space which is more or less occupied by internal structure and reinforcement.

The rigid foam core is preferably of foamed PET (polyethylene terephthalate).

The self supporting composite element constituting the integrated superstructure and chassis is made in a mould. The mould is preferably a one-sided female mould.

The method according to the invention is particularly advantageous with regard to labour hours because the use of material kits which may be precut and preshaped by automatic machines will reduce the amount of labour hours.

The use of dry mats which are filled with resin after lay up provides good working conditions for the personnel performing the lay up. Alternatively the self supporting composite element may be manufactured using a two sided mould.

When the self supporting composite element is completely cured and demoulded the element will be fitted with wheels and auxiliary equipment necessary to complete the semi-trailer.

According to a further embodiment the semi-trailer according to the invention is peculiar in that the cooperating attachment means comprise an array of threaded openings in the retainer plate, a plurality of holes through the skid plate and shells, a plurality of threaded fasteners, wherein the holes and threaded openings are aligned.

It is herewith achieved that the king pin and skid plate may be connected to the retainer plate in a particularly simple way. The array of threaded openings in the retainer plate may be distributed in a way such that the forces transferred to the king pin to the skid plates and onwards to the retainer plate is distributed across as large an area as possible.

In a preferred embodiment of the invention the threaded openings are provided by nuts or nut plates attached to the retainer plate.

Alternatively, the skid plate may be attached to the retainer plate by gluing, either alone or in combination with the above mentioned threaded fasteners, which provides an alternative firm connection of the skid plate to the retainer plate without compromising the strength of the connection. A suitable glue, that will provide a sufficiently strong glued connection is e.g. an epoxy based two component glue. An example of a suitable epoxy based two component glue system is e.g. a SikaForce 7720 L105 base combined with SikaForce 7050 hardener.

Therefore, the method for making the semitrailer superstructure according to the present invention may further comprise connecting the skid plate to the retainer plate of the cured self-supporting element by cooperating attachment means and/or by gluing the skid plate to the retainer plate.

According to a further embodiment a semi-trailer according to the invention is peculiar in that the core is composed of a rigid foam material.

It is herewith achieved that the strength of the self supporting element is significantly increased with a comparatively small weight increase. Alternatively the core may be composed of a honeycomb material e.g. fibre honeycomb or aluminium honeycomb.

The shell is a fiber reinforced resin shell, commonly known as glass fiber or fiberglass, where the fibre reinforcement is selected from glass fibre, carbon fibre or a combination thereof. The shell encapsulates the core, whereby the self supporting composite element is provided, e.g. by vacuum injection moulding as described further below.

The fibre reinforced resin shell of the superstructure preferably has an average thickness of 8-25mm, such as 8-15 mm, or in particular 8-10 mm. The average thickness of the shell is preferably uniform or substantially uniform on all surfaces of the superstructure.

A retainer plate which is composed of a set of rings will require the retainer core element to be formed with grooves that are complementary to the shape of the rings. In an alternative embodiment of the invention the retainer plate is formed with protrusions. The protrusions may bridge the gap between the shell forming the underside of the superstructure and the shell forming the load bearing surface of the superstructure.

Furthermore, the protrusions may be connected to other reinforcement means embedded in the core of the composite elements. The protrusions may also be formed as webs.

According to a further embodiment the semi-trailer according to the invention comprises a plurality of prefabricated core elements.

It is herewith achieved that the lay up of the self supporting composite element forming the semi-trailer may be performed in a simple manner using a one-sided mould. The shape of the composite element will be formed by the core elements. The superstructure and chassis may therefore take up even complicated shapes and still only require one-sided moulding.

According to a further embodiment the semi-trailer according to the invention is peculiar in that the semi-trailer comprises reinforcement means, wherein the reinforcement mean are embedded within the shells.

It is herewith achieved that the load path between the king pin and the wheels may be optimized by adding the reinforcement means to the core inside the shells. The reinforcement means may for example be unidirectional carbon fibre strips that form beams inside the shells upon curing of the composite elements.

The composition of the reinforcement means may be based on structural analysis and optimization using finite element computer programmes. The reinforcement means are applied to areas subject to high loading and will thereby decrease the loading to acceptable values.

According to a further embodiment the semi-trailer according to the invention is peculiar in that the chassis comprises two longitudinal side members on the underside of the superstructure, wherein the side members taper towards the forward end of the trailer, and wherein the side members are integrated with the shells.

It is herewith achieved that the chassis may be integrated in a simple manner. The space required below the superstructure to accommodate the wheels is provided by the longitudinal side members. The side members taper towards the forward end of the trailer to accommodate the space taken up by the towing vehicle when the semi-trailer is attached to the fifth wheel. The longitudinal side members also provides for an effective way of increasing the moment of inertia of the structure which increases the strength of the self supporting composite element.

According to a further embodiment the semi-trailer according to the invention is peculiar in that the trailer comprises a plurality of anchor plates, wherein the anchor plates are located inside the shells, and wherein the anchor plates are adapted for attachment of auxiliary elements to the shells.

By integrating a plurality of anchor plates it is achieved that attachment hart points are provided for auxiliary elements to shells. These attachment points are needed for e.g. the axels of the wheels, the landing gear and as attachment points for containers carried by the semi-trailer.

In a variant of the semitrailer, the chassis comprise two longitudinal side members on the underside of the superstructure, wherein the side members taper towards the forward end of the trailer, and wherein the side members are individually cast composite side members, which are attached to a number of anchor plates after the casting and curing of the composite superstructure and the composite side members.

This greatly simplifies the moulding process of the superstructure and ensures uniform strength and quality of the shell after curing. In addition, the simplified moulding process reduces the overall costs. The strength and maximum load capacity of the semi-trailer is not affected by providing separately cast composite side members that are subsequently attached to the anchor plates by threaded members and/or by gluing.

Thus, the method of the present invention preferably further comprises attaching the side members to the underside of the superstructure by gluing and/or by means of threaded members.

In the most simple form, the semi trailer is a flat bed trailer with an upper surface for arranging the load, e.g. a container that is to be transported.

The semi-trailer according to the present invention may also be provided with a construction covering the load bearing surface and any load arranged thereon. The load covering construction may transfer the semitrailer into a box trailer with walls and roof, e.g. as used in conventional cooling trailers with insulated wall and roof members. Alternatively, the load carrying surface of the semitrailer is covered covered with tarpaulin arranged on a frame.

Therefore, the superstructure of the semitrailer comprises tracks, such as a U-profile, that extends along at least two sides of the self-supporting superstructure. Optionally, U-profiles may also be provided along the front and/or rear end sides of the superstructure.

Preferably, the track, such the U-profile, is integrated into the self-supporting composite superstructure. Hereby a firm connection to the shell of the superstructure is obtained that has sufficient strength to carry the load of the covering structure walls of the box or the frame with tarpaulin.

The integrated tracks are preferably provided by the method of the present invention where the mould and/or the core elements are shaped for providing the track, such as a U-profile, whereby the tracks are provided during the casting of the self-supporting composite superstructure.

The anchor plates are integrated into the construction in a similar way as the retainer plate. The integrated superstructure and chassis for the semi-trailer is manufactured using a mould. Preferably an open mould.

The mould is provided with a release agent prior to laying up of the fibre mats.

In a preferred embodiment wherein the semi-trailer is used for a box trailer or a flat bed trailer the mould is a female mould with a rectangular shaped depression defining the outer limit and the load bearing surface of the superstructure. The depth of the depression is defining the height of the superstructure. The superstructure and chassis is formed using core elements which are covered by mats forming the shells and completing the lay up.

For the serial production a kit of precut fibre mats is provided. The fibre mats may be cut to the correct shape by using a CNC cutter. A kit of preshaped core elements is provided as well. The core elements may be shaped by CNC milling machines or cast into shape.

The mould is prepared by applying release agent to the surface of the mould and then a layer of fibre mats are applied said layer forms part of the outer shell. Core elements are laid down on top of the previously laid up fibre mats. In between the core elements strips of unidirectional carbon fibre, carbon fibre mats or fibre glass mats may be laid to form reinforcement members.

The retainer plate is positioned on the core elements in the king pin in area. Upon completion of the lay up of the core elements a final layer of fibre mats are placed on top of the core elements. This final layer forms the remaining part of the shell.

The mould is now vacuum packed and resin is applied using common techniques known by the persons skilled in the art. For example this may be resin transfer moulding (RTM) or vacuum infusion.

Suitable resins are for example epoxy based resins, polyester resins and/or mixtures thereof.

The preferred moulding technique is by vacuum injection /infusion moulding. This is because the resin is applied uniformly to the mould in a fast and effective manner and with a low level of manual work applied. This results in low production costs This ensures uniform and high quality of the resulting superstructure as there is a low risk for flaws during moulding of the shell that may result in weaknesses in the shell of the superstructure, e.g. from air entrained in the mould.

The resin is now cured and upon completion of the curing cycle which may be with or without the application of external heat and pressure for example in an autoclave the skid plate is placed and aligned with the retainer plate. The king pin may already be attached to the skid plate or attached after the skid plate has been connected to the retainer plate. Upon connecting the skid plate to the retainer plate the self supporting composite element forming the integrated superstructure and chassis is demoulded.

Hereafter the semi-trailer is finished by applying the auxiliary elements which may be attached to hard points formed by anchor plates which are also integrated during the lay up in this case.

The retainer plate may have preshaped openings with threads or the openings and threads may be formed after the skid plate has been positioned outside the retainer plates. Through holes are drilled through the skid plate and retainer plate whereafter the threads are applied to the openings in the retainer plate. The threads may also be provided by nut plates.

### Description of the Drawing

The invention will be explained in more detail below with reference to the accompanying drawing, where:
- fig. 1: shows an isometric view of a semi-trailer viewed from above,
- fig. 2: shows an isometric view of the semi-trailer of fig. 1 viewed from below,
- fig. 3: shows a detail view of the king pin area of the semi-trailer of fig. 1,
- fig. 4: shows an exploded view of the king pin area of the semi-trailer of fig. 1,
- fig. 5: shows a cross section of the king pin area along the line A-A in fig. 3,
- Fig. 6: shows a cross section along the line A-A in fig. 3, in a variant of the semi trailer superstructure, and
- Fig 7: shows a cross section of a separately moulded longitudinal side member.

### Detailed Description of the Invention

In the explanation of the figures, identical or corresponding elements will be provided with the same designations in different figures. Therefore, no explanation of all details will be given in connection with each single figure/embodiment.

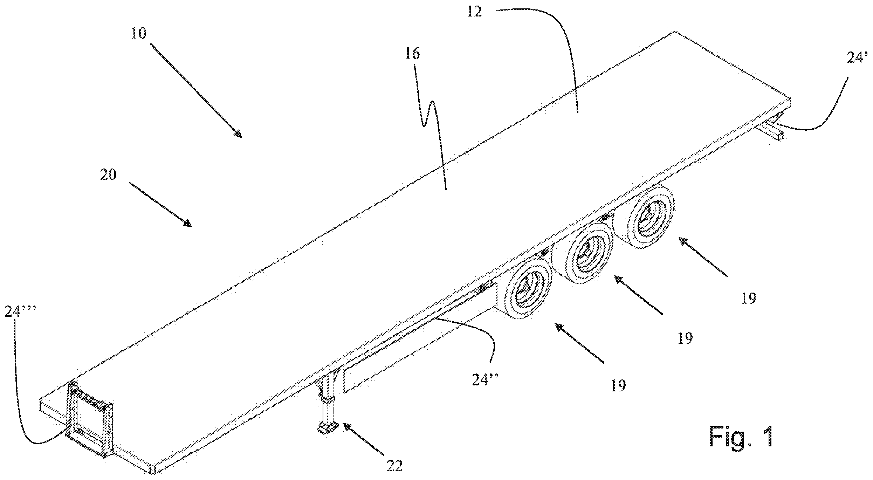

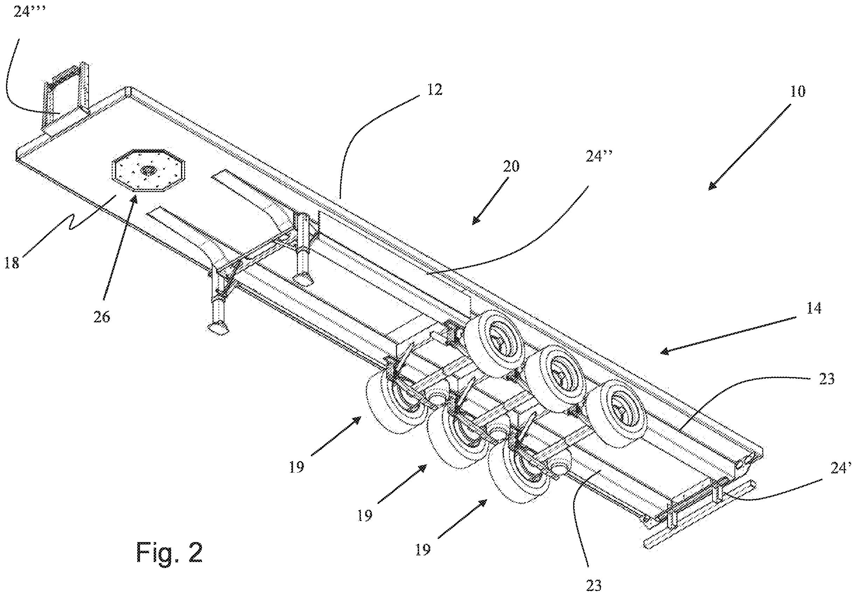

Fig. 1 and 2 show a symmetric view of an embodiment of the semi-trailer 10. Fig. 1 is a view from above and fig. 2 is a view from below. The semi-trailer 10 comprises a superstructure 12 and a chassis 14.

The superstructure 12 has a load bearing surface 16 which is adapted for supporting a payload. The superstructure 12 has an underside 18. The chassis 14 is protruding from the underside 18 of the superstructure 12.

The chassis 14 is supporting three sets of wheels 19 in the embodiment shown. Furthermore, the chassis 14 supports a landing gear 22. The landing gear 22 is used when the semi-trailer is not connected to a towing vehicle (not shown). The superstructure 12 and chassis 14 are one integrated self supporting composite element 20. The chassis 14 comprise two longitudinal side members 23 that tapers towards the front of the trailer. The side members 23 may be partly embedded within the composite element. The side member 23 act as structurally reinforcing beams adding to the strength of the semi-trailer 10.

A number of auxiliary elements 24 are connected to the integrated superstructure 12 and chassis 14. The auxiliary elements 24 is attached to anchor plates (not shown) embedded inside the composite element 20. The auxiliary elements 24 may e.g. be a rear bumper and lighting element 24' or a side fairing 24" or a forward auxiliary element for support of hydraulic and pneumatic connections 24"'.

A king pin assembly 26 is located at the underside 18 and forward end of the superstructure 12.

The king pin assembly 26 is adapted for connecting the semi-trailer 10 to a fifth wheel (not shown) of a towing vehicle (not shown).

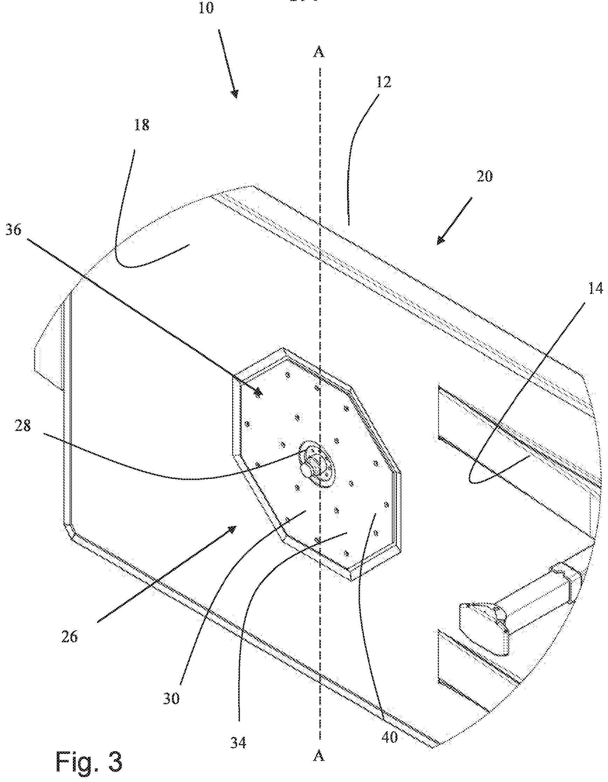

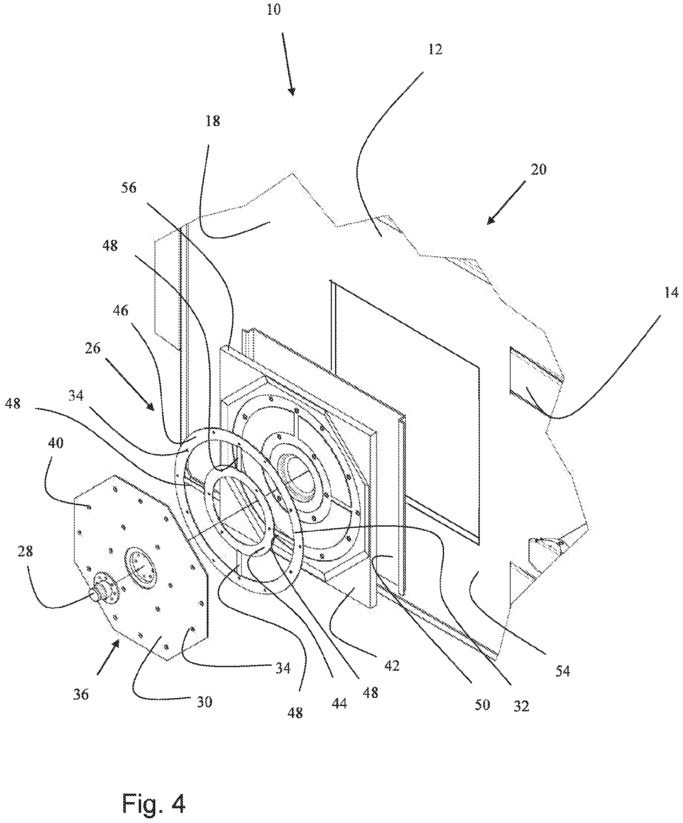

Fig. 3 and 4 shows a detailed view of the king pin area of the semi-trailer of fig. 1 and exploded view of the king pin area of the semi-trailer of fig. 1 respectively.

The king pin assembly 26 comprises a king pin 28 that is connected to a skid plate 30. The king pin 28 and skid plate 30 are located on the surface of the composite element 20. The king pin assembly 26 further comprises a retainer plate 32 which is embedded within the composite element 20. The skid plate 30 is connected to the retainer plate 32 using cooperating attachment means 34 and/or by gluing.

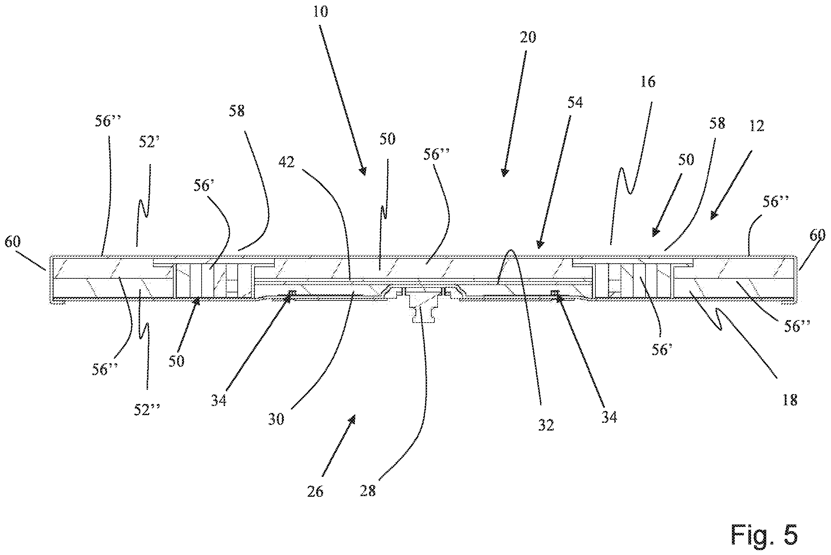

In the embodiment shown the cooperating attachment means 34 comprise an array 36 of threaded openings 38 in the retainer plates 32 and plurality of holes 40 through the skid plates 30 and composite element 20 and a plurality of threaded fasteners 34 (see fig. 5). The array 36 of holes 40 and threaded openings 38 are aligned such that the threaded fasteners 34 may be used to secure the skid plate 30 to the retainer plate 32.

When the skid plate 30 is attached to the retainer plate 32 by gluing only, the array of holes and/or threaded openings 38, 40 may be omitted in the retainer plate 32 and/or the skid plate 30.

A retainer adapter core element 42 is provided for locating the retainer plate 32 within the composite element 20. The retainer adapter core element 42 is shaped such that it may take up the retainer plate 32.

The retainer plate 32 in the shown embodiment is formed with an inner ring 44 and an outer ring 46 that are connected by intermediate members 48.

The retainer adapter core element 42 is a prefabricated core element preferably manufactured using a CNC milling machine that will enable the retainer adapter core element 42 to be with tight tolerances to the retainer plate 32.

Instead of a prefabricated core element arranged in the superstructure as the retainer adapter core element 42, the retainer adapter core element 42 may be substituted by reinforcing the superstructure with carbon fibers arranged when laying up the other fiber mats during casting of the composite superstructure 20.

Reinforcement means 50 are provided to transfer the loads from the king pin assembly 26 to the structure of the semi-trailer 10.

The reinforcement means 50 are a fibre mat or a combination of fiber mats, such as glass fiber mats and/or carbon fiber mats, which is/are enclosing the retainer adapter core element 42 and which is/are attached to the shell 52 (see fig. 5) of the composite element 20. The shell 52 (see fig. 5) is sandwiched between the skid plate 30 and the retainer plate 32.

Fig. 5 shows a cross section along the line A-A of fig. 3.

This figure may be used to describe the lay up sequence of the composite element 20. The lay up is performed in a female mould which is positioned upside down such that the lay up is performed from top to bottom.

First fibre mats for the upper part of the shell 52' is laid into the mould. Hereafter longitudinal reinforcement means 50 in the form of carbon fibre mats or glass fibre mats 58 combined with prefabricated core elements 56' are placed on the shell 52'. Other prefabricated core elements 56" are then positioned around the reinforcement means 50. The reinforcement means 50 surrounding the retainer adapter core element 42 are then placed in the mould. The retainer adapter core element 42 is located on top of the reinforcement means 50. The retainer plate 32 is located in the retainer adapter core element 42. Lastly the lower part of the shell 52" is located in the mould. The composite element 20 is then vacuum packed and resin is introduced into the fibre mats. Following the curing of the resin the skid plate 30 and the king pin 28 is attached to the retainer plate 32 using cooperating attachment means 34, here in the form of nutplates on the retainer plate 32 and fasteners.

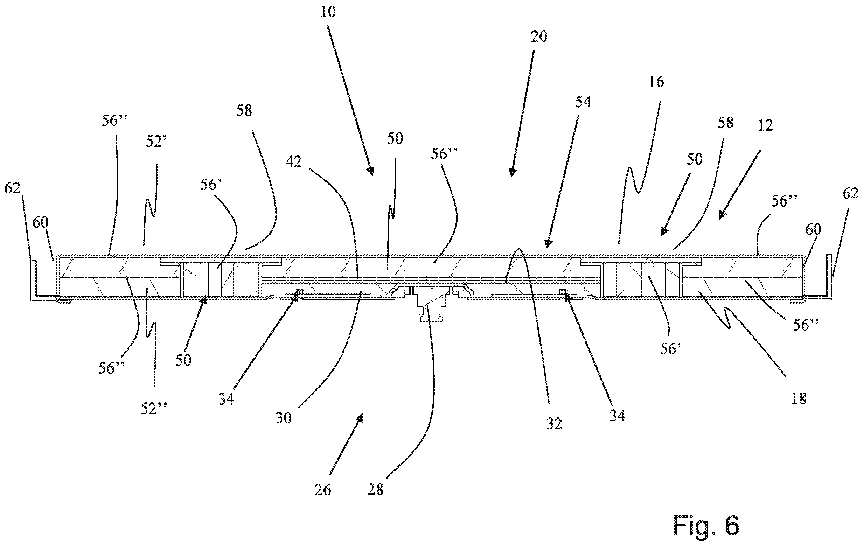

Fig. 6 shows a cross section along the line A-A of fig. 3 in a variant where tracks are provided as U-profiles 62 which are arranged along at least the sides 60 of the superstructure 12. If necessary, similar (not shown) tracks/U-profiles may be arranged along the front end and/or the rear end sides of the superstructure 12. The tracks/U-profiles 62 are provided for attachment of a frame for a tarpaulin cover or for attaching side walls of a box trailer, e.g. insulated side walls and roofing of a cooling or freezing trailer.

The U-profiles may be provided in the casting process of the superstructure 12 as described above where the profiles are provided by shaping the mould so as to form the U-profiles 62 at least along the sides 60, and optionally along the front and/or rear end sides of the superstructure 12, so as to be able to arrange fibre mats and pouring in resin in the mould for shaping of the U-profiles.

The integrated superstructure and chassis may now be removed from the mould and finishing of the semi-trailer 10 by attaching auxiliary elements 24 and wheels 19 may commence.

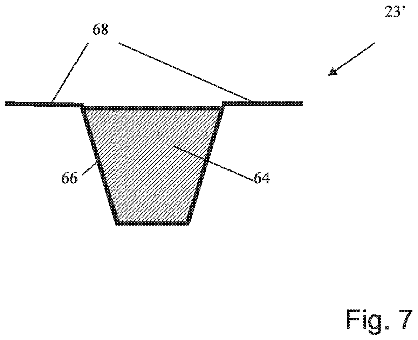

In another variant of the semitrailer, the longitudinal side members 23' are cast separately from the flat bed of the superstructure 12 and attached to the underside of the superstructure after curing. Fig 7 shows a cross section of a separately cast longitudinal side member 23'. The separately cast longitudinal side member 23' comprises a reinforced core 64 and a shell 66 as discussed above for the integrated side member 23.

The side members 23' are preferably also cast as described above for the superstructure 12.

Flanges 68 are provided along the longitudinal sides of the side members 23' for attachment of the side member 23' to the underside of the superstructure 12/composite element 20.

The side members 23' are attached by means of gluing and/or by threaded members that are attached through the flanges 68 and anchor plates (not shown) embedded inside the composite element 20.

## Claims

1. Semi-trailer comprising a superstructure having a load bearing surface and an underside, a chassis, at least one set of wheels connected to the chassis, and a king pin assembly located on the underside and forward end of the superstructure and adapted for connecting the trailer to a fifth wheel of a towing vehicle, wherein the superstructure and chassis is a self-supporting composite element having shells surrounding a core, wherein the king pin assembly comprises a king pin and a skid plate, and wherein the king pin is connected to the skid plate, and wherein the king pin assembly further comprise a retainer plate, wherein the retainer plate is located inside the shells and wherein the skid plate is connected to the retainer plate by cooperating attachment means, **characterised in that** the core comprises a retainer adapter core element, wherein the shape of the retainer core element is complimentary to the retainer plate.

2. Semi-trailer according to claim 1, **characterised in that** the cooperating attachment means comprise an array of threaded openings in the retainer plate, a plurality of holes through the skid plate and shells, a plurality of threaded fasteners, wherein the holes and threaded openings are aligned.

3. Semi-trailer according to claim 1 or 2, **characterised in that** the core is composed of a rigid foam material.

4. Semi-trailer according to claim 3, **characterised in that** the core is surrounded by a fiber reinforced resin shell, where the fibre reinforcement is selected from glass fibre, carbon fibre or a combination thereof.

5. Semi-trailer according to any one of the claims 3-4, **characterised in that** the core comprise a plurality of prefabricated core elements.

6. Semi-trailer according to any of the preceding claims, **characterised in that** the semi-trailer comprise reinforcements means, wherein the reinforcement means are embedded within the shells.

7. Semi-trailer according to any of the preceding claims, **characterised in that** the chassis comprise two longitudinal side members on the underside of the superstructure, wherein the side members taper towards the forward end of the trailer, and wherein the side members are integrated with the shells.

8. Semi-trailer according to any of the preceding claims, **characterised in that** the trailer comprise a plurality of anchor plates, wherein the anchor plates are located inside the shells, and wherein the anchor plates are adapted for attachment of auxiliary elements to the shells.

9. Semi-trailer according to any of the preceding claims, **characterised in that** the chassis comprise two longitudinal side members on the underside of the superstructure, wherein the side members taper towards the forward end of the trailer, and wherein the side members are separately cast composite side members are attached to the underside of the superstructure after the casting and curing of the composite superstructure and the composite side members, such as by gluing and/or by threaded members that are attached to a number of anchor plates embedded in underside of the superstructure.

10. Semi-trailer according to any of the preceding claims, **characterised in that** the chassis comprises a track, such as a U-profile, that extends along at least two sides of the self-supporting superstructure.

11. Semi-trailer according to claim 10, **characterised in that** the track, such as a U-profile, is integrated into the self-supporting composite superstructure.

12. King pin assembly for use in a semi-trailer according to any of the claims 1 to 11 and comprising a king pin and a skid plate, and wherein the king pin is connected to the skid plate, **characterised in that** the king pin assembly further comprise a retainer plate, wherein the retainer plate is adapted for being located inside a shell of a self-supporting composite superstructure, and wherein the skid plate is connected to the retainer plate by cooperating attachment means.

13. Method of producing a superstructure and chassis for a semi-trailer according to claim 1, wherein the superstructure and chassis is a self-supporting composite element having shells surrounding a core, and comprising the steps of;
A. providing a mould,
B. providing a kit of pre-cut fibre mats,
C. providing a kit of pre-shaped core elements,
D. providing a king pin assembly comprising a king pin, a skid plate, a retainer plate and cooperating attachment means.
E. lay up of the fibre mats, the core elements and the retainer plate in the mould according to a predefined sequence,
F. Applying resin to the fibre mats,
G. Curing of the resin,
H. Connecting the king pin, the skid plate and the retainer plate by cooperating attachment means, by means of the core comprising a retainer adapter core element, wherein the shape of the retainer core element is complimentary to the retainer plate,
I. De-moulding the cured self-supporting composite element.

14. Method according to claim 13, wherein providing the cooperating attachment means comprise a step of providing threaded openings or nutplates to the retainer plate and drilling through holes through the cured fibre mats, said through holes and threaded openings or nutplates being co-axially arranged, and attaching threaded fasteners to the retainer plate through the through holes.

15. Method according to claim 13 or 14, further comprising connecting the skid plate to the retainer plate of the cured self-supporting element by cooperating attachment means and/or by gluing the skid plate to the retainer plate.

16. Method according to any of the claims 13-15, further comprising that the mould and/or the core elements are shaped for providing the track, such as a U-profile, whereby the tracks are provided during the casting of the self-supporting composite superstructure.

17. Method according to any of the claims 13-16, further comprising that the resin is applied to the mould by vacuum injection.

## Patentansprüche

1. Sattelauflieger, umfassend einen Aufbau, der eine lasttragende Fläche und eine Unterseite aufweist, ein Fahrgestell, mindestens einen mit dem Fahrgestell verbundenen Radsatz und eine Königszapfenanordnung, die sich an der Unterseite und dem vorderen Ende des Aufbaus befindet und zum Verbinden des Aufliegers mit einem fünften Rad eines Zugfahrzeugs angepasst ist, wobei der Aufbau und das Fahrgestell ein selbsttragendes zusammengesetztes Element sind, das Schalen aufweist, die einen Kern umgeben, wobei die Königszapfenanordnung einen Königszapfen und eine Gleitplatte umfasst und wobei der Königszapfen mit der Gleitplatte verbunden ist und wobei die Königszapfenanordnung ferner eine Halteplatte umfasst, wobei sich die Halteplatte innerhalb der Schalen befindet und wobei die Gleitplatte mit der Halteplatte durch zusammenwirkende Anbringmittel verbunden ist, **dadurch gekennzeichnet, dass** der Kern ein Halteadapterkernelement umfasst, wobei die Form des Haltekernelements komplementär zu der Halteplatte ist.

2. Sattelauflieger nach Anspruch 1, **dadurch gekennzeichnet, dass** die zusammenwirkenden Anbringmittel eine Reihe von Gewindeöffnungen in der Halteplatte, eine Vielzahl von Löchern durch die Gleitplatte und die Schalen, eine Vielzahl von Gewindebefestigungselementen umfassen, wobei die Löcher und Gewindeöffnungen ausgerichtet sind.

3. Sattelauflieger nach Anspruch 1 oder 2, **dadurch gekennzeichnet, dass** der Kern aus einem Hartschaummaterial besteht.

4. Sattelauflieger nach Anspruch 3, **dadurch gekennzeichnet, dass** der Kern von einer faserverstärkten Harzschale umgeben ist, wobei die Faserverstärkung aus Glasfaser, Kohlefaser oder einer Kombination davon ausgewählt ist.

5. Sattelauflieger nach einem der Ansprüche 3-4, **dadurch gekennzeichnet, dass** der Kern eine Vielzahl von vorgefertigten Kernelementen umfasst.

6. Sattelauflieger nach einem der vorhergehenden Ansprüche, **dadurch gekennzeichnet, dass** der Sattelauflieger Verstärkungsmittel umfasst, wobei die Verstärkungsmittel in den Schalen eingebettet sind.

7. Sattelauflieger nach einem der vorhergehenden Ansprüche, **dadurch gekennzeichnet, dass** das Fahrgestell zwei längliche Seitenelemente an der Unterseite des Aufbaus umfasst, wobei sich die Seitenelemente in Richtung des vorderen Endes des Aufliegers verjüngen und wobei die Seitenelemente mit den Schalen integriert sind.

8. Sattelauflieger nach einem der vorhergehenden Ansprüche, **dadurch gekennzeichnet, dass** der Auflieger eine Vielzahl von Ankerplatten umfasst, wobei sich die Ankerplatten innerhalb der Schalen befinden und wobei die Ankerplatten zur Anbringung von Hilfselementen an den Schalen angepasst sind.

9. Sattelauflieger nach einem der vorhergehenden Ansprüche, **dadurch gekennzeichnet, dass** das Fahrgestell zwei längliche Seitenelemente an der Unterseite des Aufbaus umfasst, wobei sich die Seitenelemente in Richtung des vorderen Endes des Aufliegers verjüngen und wobei die Seitenelemente getrennt gegossene zusammengesetzte Seitenelemente sind, die nach dem Gießen und Aushärten des zusammengesetzten Aufbaus und der zusammengesetzten Seitenelemente an der Unterseite des Aufbaus angebracht werden, wie etwa durch Kleben und/oder durch Gewindeelemente, die an einer Anzahl von Ankerplatten angebracht werden, die in die Unterseite des Aufbaus eingebettet sind.

10. Sattelauflieger nach einem der vorhergehenden Ansprüche, **dadurch gekennzeichnet, dass** das Fahrgestell eine Schiene, wie etwa ein U-Profil, umfasst, die sich entlang mindestens zwei Seiten des selbsttragenden Aufbaus erstreckt.

11. Sattelauflieger nach Anspruch 10, **dadurch gekennzeichnet, dass** die Schiene, wie etwa ein U-Profil, in den selbsttragenden zusammengesetzten Aufbau integriert ist.

12. Königszapfenanordnung zur Verwendung in einem Sattelauflieger nach einem der Ansprüche 1 bis 11 und umfassend einen Königszapfen und eine Gleitplatte und wobei der Königszapfen mit der Gleitplatte verbunden ist, **dadurch gekennzeichnet, dass** die Königszapfenanordnung ferner eine Halteplatte umfasst, wobei die Halteplatte dazu angepasst ist, sich innerhalb einer Schale eines selbsttragenden zusammengesetzten Aufbaus zu befinden, und wobei die Gleitplatte durch zusammenwirkende Anbringmittel mit der Halteplatte verbunden ist.

13. Verfahren zur Herstellung eines Aufbaus und eines Fahrgestells für einen Sattelauflieger nach Anspruch 1, wobei der Aufbau und das Fahrgestell ein selbsttragendes zusammengesetztes Element sind, das Schalen aufweist, die einen Kern umgeben, und umfassend die folgenden Schritte:
A. Bereitstellen einer Form,
B. Bereitstellen eines Bausatzes aus vorgeschnittenen Fasermatten,
C. Bereitstellen eines Bausatzes aus vorgeformten Kernelementen,
D. Bereitstellen einer Königszapfenanordnung, die einen Königszapfen, eine Gleitplatte, eine Halteplatte und zusammenwirkende Anbringmittel umfasst.
E. Auflegen der Fasermatten, der Kernelemente und der Halteplatte in der Form in einer vordefinierten Reihenfolge,
F. Auftragen von Harz auf die Fasermatten,
G. Aushärten des Harzes,
H. Verbinden des Königszapfens, der Gleitplatte und der Halteplatte durch zusammenwirkende Anbringmittel mittels des Kerns, der ein Halteadapterkernelement umfasst, wobei die Form des Haltekernelements komplementär zu der Halteplatte ist,
I. Entformen des ausgehärteten selbsttragenden zusammengesetzten Elements.

14. Verfahren nach Anspruch 13, wobei das Bereitstellen der zusammenwirkenden Anbringmittel einen Schritt des Bereitstellens von Gewindeöffnungen oder Mutterplatten an der Halteplatte und des Bohrens von Durchgangslöchern durch die ausgehärteten Fasermatten, wobei die Durchgangslöcher und Gewindeöffnungen oder Mutterplatten koaxial angeordnet sind, und des Anbringens von Gewindebefestigungselementen an der Halteplatte durch die Durchgangslöcher umfasst.

15. Verfahren nach Anspruch 13 oder 14, ferner umfassend Verbinden der Gleitplatte mit der Halteplatte des ausgehärteten selbsttragenden Elements durch zusammenwirkende Anbringmittel und/oder durch Kleben der Gleitplatte an die Halteplatte.

16. Verfahren nach einem der Ansprüche 13-15, ferner umfassend, dass die Form und/oder die Kernelemente zur Bereitstellung der Schiene, wie etwa eines U-Profils, geformt sind, wobei die Schienen während des Gießens des selbsttragenden zusammengesetzten Aufbaus bereitgestellt werden.

17. Verfahren nach einem der Ansprüche 13-16, ferner umfassend, dass das Harz durch Vakuuminjektion auf die Form aufgetragen wird.

## Revendications

1. Semi-remorque comprenant une superstructure ayant une surface porteuse et une face inférieure, un châssis, au moins un jeu de roues raccordées au châssis, et un ensemble pivot d'attelage situé sur la face inférieure et l'extrémité avant de la superstructure et adapté pour raccorder la remorque à une cinquième roue d'un véhicule tracteur, la superstructure et le châssis étant un élément composite autoportant ayant des coques entourant un noyau, dans laquelle l'ensemble pivot d'attelage comprend un pivot d'attelage et une plaque de glissement, et dans laquelle le pivot d'attelage est raccordé à la plaque de glissement, et dans laquelle l'ensemble pivot d'attelage comprend en outre une plaque de retenue, dans laquelle la plaque de retenue est située à l'intérieur des coques et dans laquelle la plaque de glissement est raccordée à la plaque de retenue par des moyens de fixation coopérants, **caractérisée en ce que** le noyau comprend un élément de noyau adaptateur de retenue, dans laquelle la forme de l'élément de noyau de retenue est complémentaire de la plaque de retenue.

2. Semi-remorque selon la revendication 1, **caractérisée en ce que** les moyens de fixation coopérants comprennent un réseau d'ouvertures filetées dans la plaque de retenue, une pluralité de trous traversant la plaque de glissement et les coques, une pluralité de fixations filetées, dans laquelle les trous et les ouvertures filetées sont alignées.

3. Semi-remorque selon la revendication 1 ou 2, **caractérisée en ce que** le noyau est composé d'un matériau en mousse rigide.

4. Semi-remorque selon la revendication 3, **caractérisée en ce que** le noyau est entouré d'une coque en résine renforcée de fibres, où le renfort fibreux est choisi parmi la fibre de verre, la fibre de carbone ou une combinaison de celles-ci.

5. Semi-remorque selon l'une quelconque des revendications 3 à 4, **caractérisée en ce que** le noyau comprend une pluralité d'éléments de noyau préfabriqués.

6. Semi-remorque selon l'une quelconque des revendications précédentes, **caractérisée en ce que** la semi-remorque comprend des moyens de renforts, les moyens de renfort étant encastrés à l'intérieur des coques.

7. Semi-remorque selon l'une quelconque des revendications précédentes, **caractérisée en ce que** le châssis comprend deux longerons longitudinaux sur la face inférieure de la superstructure, dans laquelle les longerons s'effilent vers l'extrémité avant de la remorque, et dans laquelle les longerons sont intégrés avec les coques.

8. Semi-remorque selon l'une quelconque des revendications précédentes, **caractérisée en ce que** la remorque comprend une pluralité de plaques d'ancrage, dans laquelle les plaques d'ancrage sont situées à l'intérieur des coques, et dans laquelle les plaques d'ancrage sont adaptées pour la fixation d'éléments auxiliaires aux coques.

9. Semi-remorque selon l'une quelconque des revendications précédentes, **caractérisée en ce que** le châssis comprend deux longerons longitudinaux sur la face inférieure de la superstructure, dans laquelle les longerons s'effilent vers l'extrémité avant de la remorque, et dans laquelle les longerons sont des éléments latéraux composites coulés séparément fixés à la face inférieure de la superstructure après la coulée et le durcissement de la superstructure composite et des éléments latéraux composites, par exemple par collage et/ou par des éléments filetés qui sont fixés à un certain nombre de plaques d'ancrage encastrées dans la face inférieure de la superstructure.

10. Semi-remorque selon l'une quelconque des revendications précédentes, **caractérisée en ce que** le châssis comprend une piste, telle qu'un profil en U, qui s'étend le long d'au moins deux côtés de la superstructure autoportante.

11. Semi-remorque selon la revendication 10, **caractérisée en ce que** la piste, telle qu'un profil en U, est intégrée à la superstructure composite autoportante.

12. Ensemble pivot d'attelage destiné à être utilisé dans une semi-remorque selon l'une quelconque des revendications 1 à 11 et comprenant un pivot d'attelage et une plaque de glissement, et dans laquelle le pivot d'attelage est raccordé à la plaque de glissement, **caractérisé en ce que** l'ensemble pivot d'attelage comprend en outre une plaque de retenue, dans laquelle la plaque de retenue est adaptée pour être située à l'intérieur d'une coque d'une superstructure composite autoportante, et dans laquelle la plaque de glissement est raccordée à la plaque de retenue par des moyens de fixation coopérants.

13. Procédé de fabrication d'une superstructure et d'un châssis pour une semi-remorque selon la revendication 1, dans lequel la superstructure et le châssis sont un élément composite autoportant ayant des coques entourant un noyau, et comprenant les étapes de ;
A. fourniture d'un moule,
B. fourniture d'un kit de nappes de fibres prédécoupées,
C. fourniture d'un kit d'éléments de noyau préformés,
D. fourniture d'un ensemble pivot d'attelage comprenant un pivot d'attelage, une plaque de glissement, une plaque de retenue et des moyens de fixation coopérants.
E. mise en place de nappes de fibres, des éléments de noyau et de la plaque de retenue dans le moule selon une séquence prédéfinie,
F. application de résine sur les nappes de fibres,
G. durcissement de la résine,
H. raccordement du pivot d'attelage, de la plaque de glissement et de la plaque de retenue par des moyens de fixation coopérants, au moyen du noyau comprenant un élément de noyau adaptateur de retenue, dans lequel la forme de l'élément de noyau de retenue est complémentaire de la plaque de retenue,
I. démoulage de l'élément composite autoportant durci.

14. Procédé selon la revendication 13, dans lequel la fourniture des moyens de fixation coopérants comprend une étape consistant à fournir des ouvertures filetées ou des plaques à écrous à la plaque de retenue et à percer des trous à travers les nattes de fibres durcies, lesdits trous traversants et ouvertures filetées ou plaques à écrous étant agencés de manière coaxiale, et fixer des fixations filetées à la plaque de retenue à travers les trous traversants.

15. Procédé selon la revendication 13 ou 14, comprenant en outre le raccordement de la plaque de glissement à la plaque de retenue de l'élément autoportant durci par des moyens de fixation coopérants et/ou en collant la plaque de glissement à la plaque de retenue.

16. Procédé selon l'une quelconque des revendications 13 à 15, comprenant en outre le fait que le moule et/ou les éléments de noyau sont formés pour fournir la piste, telle qu'un profil en U, de sorte que les pistes sont fournies pendant la coulée de la superstructure composite autoportante.

17. Procédé selon l'une quelconque des revendications 13 à 16, comprenant en outre que la résine est appliquée au moule par injection sous vide.
